# EUROPEAN PATENT SPECIFICATION

(11) **EP 1 637 814 B1**
(45) Date of publication and mention of the grant of the patent: **23.04.2008**
(21) Application number: 05255770.9
(22) Date of filing: 16.09.2005
(51) Int. Cl.: F24F 13/02, F16L 23/14

(54) **Pocket flange of duct**
Kanalhohlflansch
Bride creuse de conduit

(30) Priority: 17.09.2004 KR 2004074625
(43) Date of publication of application: 22.03.2006
(73) Proprietor: Jinwoong Technology, Hwaseong-shi, Kyonggi-do 445-941 (KR)
(72) Inventor: Cha, Kyu-Seok, Hwaseong-shi, Kyonggi-do 445-941 (KR); Heo, Seok, Hwaseong-shi, Kyonggi-do 445-941 (KR)
(74) Representative: Fenlon, Christine Lesley

(56) References cited:
- EP-A- 0 537 594
- AT-B- 383 516
- US-A- 4 564 227
- US-A- 4 739 802
- US-A- 5 358 013
- US-A- 5 462 089
- US-A- 6 109 665

## Description

### Field of the invention

The present invention relates to a pocket flange of a duct, and more particularly, to a pocket flange of a duct formed at a portion of the duct, at which both ducts are engaged, to reinforce a connection part of the both ducts.

### Description of the Prior Art

In general, a duct for guiding the flow of cool air or hot air ejected from an air-conditioner is installed on the ceiling of a building. Typically, the duct is fabricated by bending and engaging a zinc-plated steel plate (galvanized iron) having a uniform thickness.

In addition, the duct is assembled by connecting a plurality of unit ducts to one another using bolts and nuts. In particular, recently, a duct structure with reinforced connection parts connected to each other through a predetermined shape of flange has been developed.

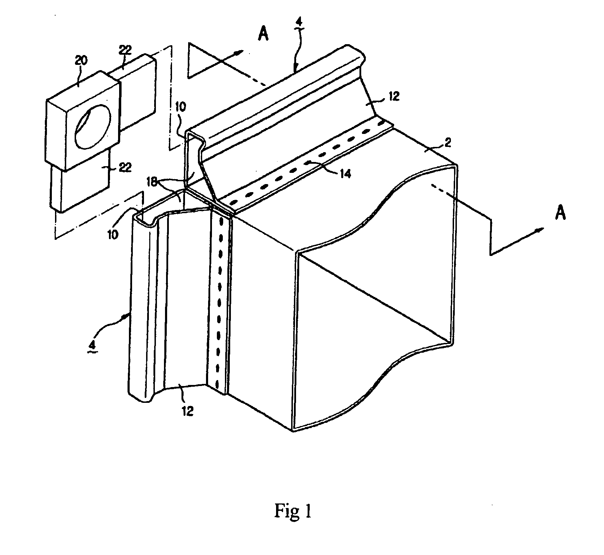

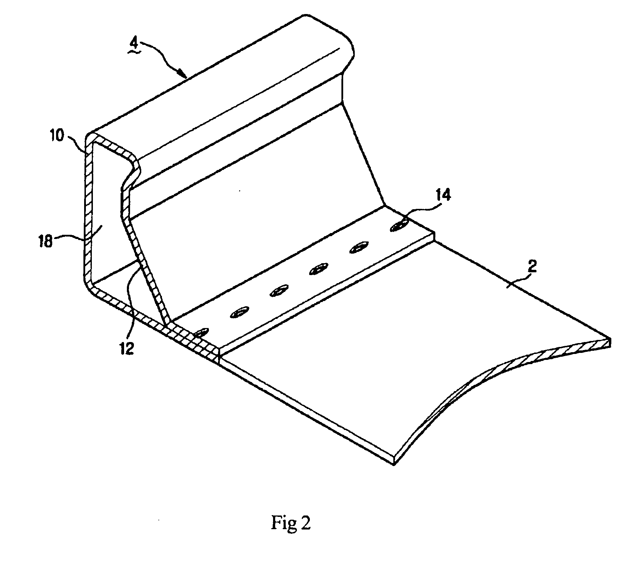

For example, as shown in FIGS. 1 and 2, a structure of a flange 4 bent at both ends of a duct 2 to increase rigidity and strength of the flange 4 is disclosed in Korean Utility Model Registration No. 0248233, entitled "Flange of duct".

The flange 4 includes a joint part 10 perpendicularly bent outward at both ends of the duct 2, and a bent part 12 extending from the joint part 10 to be bent several times.

Specifically, the bent part 12 extending from the joint part 10 is bent perpendicular to the joint part 10, bent inward at a predetermined inclined angle to an outer surface of the joint part 10, and then bent again in parallel with the joint part 10. Finally, the bent part 12 is in contact with an outer surface of the duct 2 to be bent perpendicular to the joint part 10.

As described above, an end of the bent part 12 is fixed to the outer surface of the duct 2 by a fixed part 14 through welding or pressing.

However, in the conventional flange 4 of the duct 2, the end of the bent part 12 and the outer surface of the duct 2 are engaged with each other to form a dual-layered structure so that strength of the flange may be partially decreased. Therefore, when bending or vibration is repeatedly generated at the connection part of the duct 2 for a long time, the connection part may be broken.

In addition, when the fixed part 14 formed by welding is used for a long time, moisture may penetrate into the welded part to corrode the welded part so that the leaked flange 4 may be separated from the duct 2. Therefore, the strength of the connection part in the duct 2 is rapidly decreased, and its durability is also reduced.

Further, when the fixed part 14 is simply formed by partially pressing, the fixed part 14 can be partially torn during the pressing and the galvanized iron on the surface of the duct 2 can be broken so that the duct 2 can be corroded to have an irregular cross-section, thereby rapidly decreasing the strength.

A pocket flange in which welding is not employed is disclosed in US-A-4739802, the pocket flange comprising a pocket flange of a duct having a joint part integrally formed with an end of the duct and bent perpendicular to the duct, and a bent part bent again toward the duct from the joint part, an end extending from the bent part being disposed on and in contact with an outer surface of the duct, and the duct having a first bent part, which covers an edge and an upper surface of the end, and a second bent part, which is reversely bent with respect to the first bent part.

### SUMMARY OF THE INVENTION

Accordingly, it is desirable to provide a pocket flange of a duct capable of increasing strength of a connection part of the duct, and remarkably improving durability since leakage and separation due to corrosion (chemical reaction) are not generated in spite of long-term use.

According to the present invention, there is provided a pocket flange of a duct having a joint part integrally formed with an end of the duct and bent perpendicular to the duct, and a bent part bent again toward the duct from the joint part, an end extending from the bent part being disposed on and in contact with an outer surface of the duct, and the duct having a first bent part, which covers an edge and an upper surface of the end, and a second bent part, which is reversely bent with respect to the first bent part; characterised in that the said first and second bent parts of the duct are pressed together to form a pressed part.

The end of the bent part bent from the joint part may be in contact with the outer surface of the duct in a state that the end is bent perpendicular to the joint part, to allow an easy joint of a corner plate.

In addition, the bent part may be bent perpendicular to the joint part, bent inward in an inclined manner to the joint part, and bent parallel to the joint part to form a guide part, and then the end of the bent part may be in contact with the outer surface of the duct in a state that the end is bent outward in an inclined manner.

In addition, the lowermost surface of the pressed part may correspond to an inner surface of the duct.

Further, when a width of the end at the pressed part is larger than a gap between the joint part and the guide part, the end may not be separated from the pressed part even when the guide part is pushed to the joint part.

Meanwhile, the pressed part may have a groove formed at the lowermost surface to more securely prevent the end from being separated from the pressed part.

### BRIEF DESCRIPTION OF THE DRAWINGS

The above and other objects, features and advantages of the present invention will be more apparent from the following detailed description taken in conjunction with the accompanying drawings, in which:
FIG. 1 is a perspective view showing an example of a connection part of a conventional duct;
FIG. 2 is a sectional perspective view of a flange of the duct in FIG. 1;
FIG. 3 is a sectional perspective view showing an example of a pocket flange of a duct in accordance with an exemplary embodiment of the present invention;
FIG. 4 is a cross-sectional view showing an example of a pocket flange of a duct in accordance with an exemplary embodiment of the present invention;
FIG. 5 is a sectional perspective view showing another example of a pocket flange of a duct in accordance with an exemplary embodiment of the present invention;
FIG. 6 is a cross-sectional view showing another example of a pocket flange of a duct in accordance with an exemplary embodiment of the present invention; and
FIG. 7 is a process view showing a method of manufacturing a pocket flange of a duct in accordance with an exemplary embodiment of the present invention.

### DETAILED DESCRIPTION OF THE PREFERRED EMBODIMENTS

Hereinafter, a preferred embodiment of the present invention will be described with reference to the accompanying drawings. In the following description and drawings, the same reference numerals are used to designate the same or similar components, and so repetition of the description on the same or similar components will be omitted.

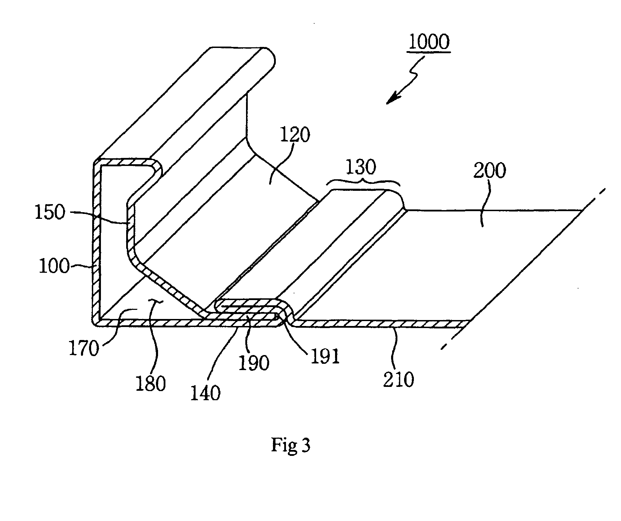

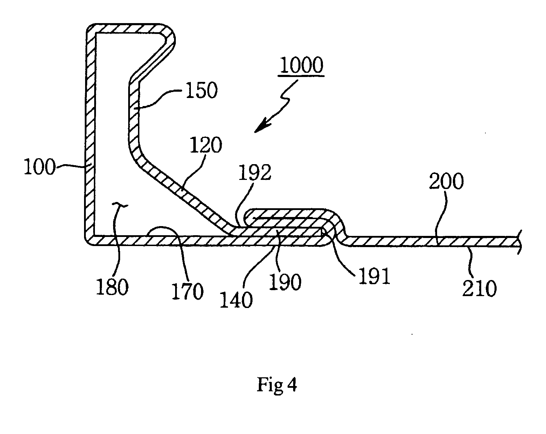

FIGS. 3 and 4 illustrate a structure of a pocket flange of a duct in accordance with an exemplary embodiment of the present invention.

As shown in FIGS. 3 and 4, the pocket flange 1000 of the duct in accordance with an exemplary embodiment of the present invention includes a joint part 100 integrally formed with an end of the duct 200 and bent perpendicular to the duct 200, and a bent part 120 bent again toward the duct 200 from the joint part 100 and having an end 190 which extends from the bent part 120 and is disposed on a bottom surface 170 (i.e., an outer surface of the duct 200) of a space 180 to be described later.

At this time, the bent part 120 bent from the joint part 100 has the end 190 disposed on the outer surface 170 of the duct 200 in the state that the end 190 is bent perpendicular to the joint part 100. As a result, a corner plate 20 (see FIG. 1) and projections 22 (see FIG. 1) can be easily engaged with the flange 1000.

More specifically, the bent part 120 is bent perpendicular to the joint part 100, bent inward in an inclined manner to the joint part 100, and bent again in parallel with the joint part 100 to form a guide part 150, and then the end 190 of the bent part 120 is in contact with the outer surface 170 in the state that the end 190 is bent outward in an inclined manner.

Next, in the state that the end 190 extending from the bent part 120 is in contact with the duct 200, the duct 200 is bent to cover an edge 191 and an upper surface 192 of the end 190 and then reversely bent to be pressed to each other.

At this time, preferably, the end 190 inserted into the pressed part 130 has a width larger than a gap between the joint part 100 and the guide part 150. As a result, even when the guide part 150 moves toward the joint part 100 by external force, it is possible to prevent the end 190 from being separated from the pressed part 130, thereby preventing the leakage.

In consideration of the installation of the duct, preferably, a surface of the deformed duct 200, i.e., the pressed part is parallel to a surface of the duct 200.

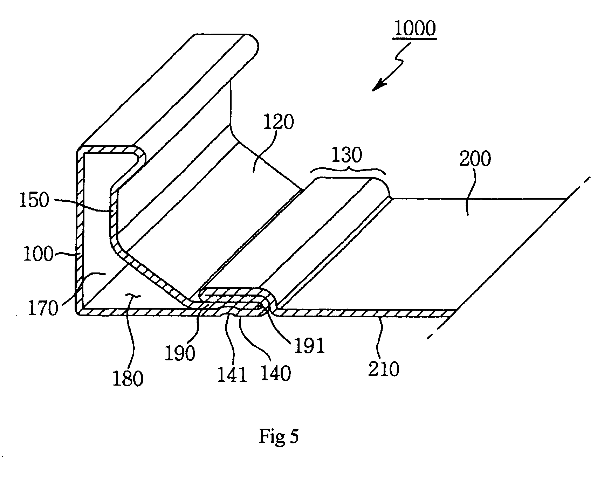

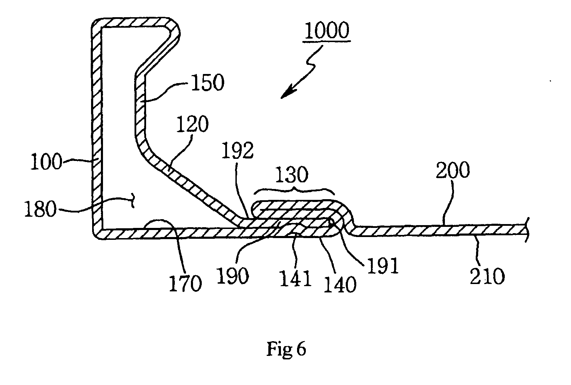

In addition, as shown in FIGS. 5 and 6, when a groove 141 is formed at a lowermost surface 140 of the pressed part 130, the end 190 cannot be easily separated from the pressed part 130 in spite of the external force.

Further, a space 180 is formed between the duct 200, the joint part 100 and the bent part 120 to provide a region for inserting the projection such that the duct is engaged with an adjacent duct.

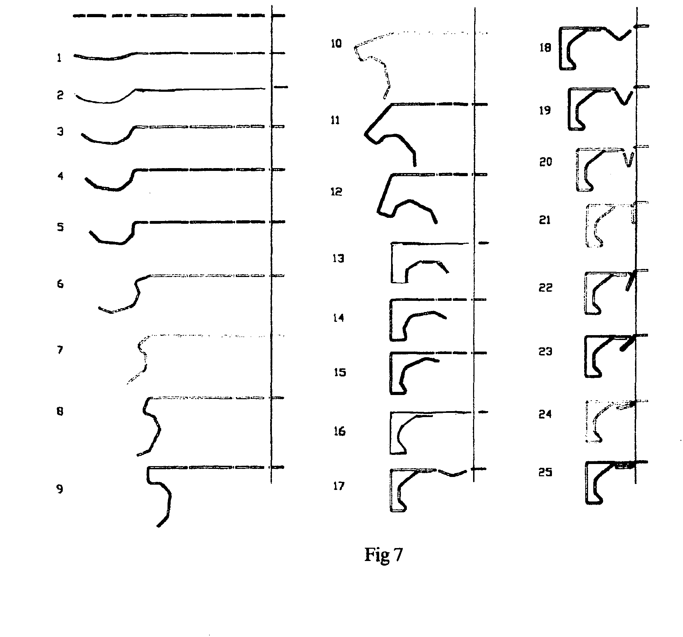

The bending and pressing operation can be performed using a predetermined roll forming machine, and the processes are sequentially shown in FIG. 7.

As can be seen from the foregoing, the pocket flange of the duct in accordance with the present invention is capable of preventing leakage and separation due to corrosion to improve durability of the duct by bending the duct to cover an edge and an upper surface of the end and then reversely bending in the state that the end extending from the bent part of the flange is in contact with the duct, without welding the end of the bent part.

In addition, since the edge of the end has a large thickness, its structural strength also increases.

Further, since the welding process is not included to make expendable supplies and electric power used in the welding process unnecessary, its manufacturing cost is very low and its manufacturing process is very simple.

Exemplary embodiments of the present invention have been described in detail, however the present invention is not limited thereto. Those skilled in the art will appreciate that a variety of modifications can be made to the described embodiments without departing from the scope of the present invention as defined by the appended claims.

## Claims

1. A pocket flange (1000) of a duct (200) having a joint part (100) integrally formed with an end of the duct (200) and bent perpendicular to the duct (200), and a bent part (120) bent again toward the duct (200) from the joint part (100), an end (190) extending from the bent part (120) being disposed on and in contact with an outer surface (170) of the duct (200), and the duct (200) having a first bent part, which covers an edge (191) and an upper surface (192) of the end (190), and a second bent part, which is reversely bent with respect to the first bent part;
**characterised in that** the said first and second bent parts of the duct (200) are pressed together to form a pressed part (130).

2. The pocket flange according to claim 1, wherein the end (190) of the bent part (120) bent from the joint part (100) is in contact with the outer surface (170) of the duct (200) in a state that the end (190) is bent perpendicular to the joint part (100).

3. The pocket flange according to claim 2, wherein the bent part (120) is bent perpendicular to the joint part (100), bent inward in an inclined manner to the joint part (100), and bent parallel to the joint part (100) to form a guide part (150), and then the end (190) of the bent part (120) is in contact with the outer surface (170) of the duct (200) in a state that the end (190) is bent outward in an inclined manner.

4. The pocket flange according to claim 3, wherein a lowermost surface (140) of the pressed part (130) corresponds to an inner surface (210) of the duct (200).

5. The pocket flange according to claim 3, wherein the end (190) at the pressed part (130) has a width larger than a gap between the joint part (100) and the guide part (150).

6. The pocket flange according to any one of claims 1 to 5, wherein the pressed part (130) has a groove (141) formed at the lowermost surface (140).

## Patentansprüche

1. Aufnahmeflansch (1000) einer Leitung (200) mit einem Anschlussstück (100), das mit einem Ende der Leitung (200) einstückig ausgebildet ist und das senkrecht zur Leitung (200) gebogen ist sowie einem Bogenstück (120), das erneut von dem Anschlussstück (100) zur Leitung (200) hingebogen ist, wobei ein Ende (190), das von dem Bogenstück (120) abgeht, angeordnet ist auf und in Kontakt mit einer Außenfläche (170) der Leitung (200), und die Leitung (200) ein erstes Bogenstück besitzt, das eine Kante (191) und eine Oberfläche (192) des Endes (190) überdeckt, sowie ein zweites Bogenstück , das zum ersten Bogenstück umgedreht gekrümmt ist;
**dadurch gekennzeichnet, dass** das erste und das zweite Bogenstück der Leitung (200) unter Ausbildung eines Pressstücks (130) zusammen gepresst sind.

2. Aufnahmeflansch nach Anspruch 1, wobei das Ende (190) des Bogenstücks (120), das vom Anschlussstück (100) weggebogen ist, die Außenfläche (170) der Leitung (200) so berührt, dass das Ende (190) senkrecht zum Anschlussstück (100) gebogen ist.

3. Aufnahmeflansch nach Anspruch 2, wobei das Bogenstück (120) senkrecht zum Anschlussstück (100) hingebogen ist, eingebogen in schräger Weise zum Anschlussstück (100) und parallel gebogen zum Anschlussstück (100) unter Ausbildung eines Führungsstücks (150), und dann das Ende (190) des Bogenstücks (120) in Kontakt ist mit der Außenfläche (170) der Leitung (200) in der Weise, dass das Ende (190) schräg nach außen gebogen ist.

4. Aufnahmeflansch nach Anspruch 3, wobei die zuunterst liegende Fläche (140) des Pressstücks (130) der Innenfläche (210) der Leitung (200) entspricht.

5. Aufnahmeflansch nach Anspruch 3, wobei das Ende (190) des Pressstücks (130) breiter ist als der Spalt zwischen dem Anschlussstück (100) und dem Führungsstück (150).

6. Aufnahmeflansch nach irgendeinem der Ansprüche 1 bis 5, wobei das Pressstück (130) eine an der zuunterst liegenden Seite (140) ausgebildete Nut (141) besitzt.

## Revendications

1. Bride à poche (1000) d'une conduite (200) ayant une partie de jonction (100) formée d'un seul tenant avec une extrémité de la conduite (200) et courbée perpendiculairement à la conduite (200), et une partie courbée (120) recourbée vers la conduite (200) depuis la partie de jonction (100), une extrémité (190) s'étendant depuis la partie courbée (120) étant disposée sur et en contact avec une surface extérieure (170) de la conduite (200), et la conduite (200) ayant une première partie courbée, qui couvre un bord (191) et une surface supérieure (192) de l'extrémité (190), et une deuxième partie courbée, qui est courbée en sens inverse par rapport à la première partie courbée ;
**caractérisée en ce que** lesdites première et deuxième parties courbées de la conduite (200) sont pressées l'une contre l'autre pour former une partie pressée (130).

2. Bride à poche selon la revendication 1, dans laquelle l'extrémité (190) de la partie courbée (120) courbée pour former la partie de jonction (100) est en contact avec la surface extérieure (170) de la conduite (200) dans un état où l'extrémité (190) est courbée perpendiculairement à la partie de jonction (100).

3. Bride à poche selon la revendication 2, dans laquelle la partie courbée (120) est courbée perpendiculairement à la partie de jonction (100), courbée vers l'intérieur d'une manière inclinée par rapport à la partie de jonction (100), et courbée parallèlement à la partie de jonction (100) pour former une partie de guidage (150), puis l'extrémité (190) de la partie courbée (120) est en contact avec la surface extérieure (170) de la conduite (200) dans un état où l'extrémité (190) est courbée vers l'extérieur d'une manière inclinée.

4. Bride à poche selon la revendication 3, dans laquelle une surface la plus basse (140) de la partie pressée (130) correspond à une surface intérieure (210) de la conduite (200).

5. Bride à poche selon la revendication 3, dans laquelle l'extrémité (190) située au niveau de la partie pressée (130) a une largeur supérieure à un espace entre la partie de jonction (100) et la partie de guidage (150).

6. Bride à poche selon l'une quelconque des revendications 1 à 5, dans laquelle la partie pressée (130) comporte une rainure (141) formée dans la surface la plus basse (140).
